# EUROPEAN PATENT APPLICATION

(11) **EP 1 511 322 A1**
(43) Date of publication of application: **02.03.2005**
(21) Application number: 04020182.4
(22) Date of filing: 25.08.2004
(51) Int. Cl.: H04N 7/26

(54) **Method for segmenting moving object of compressed moving image**

(30) Priority: 26.08.2003 KR 2003059175
(71) Applicant: LG Electronics Inc., Seoul (KR)
(72) Inventor: Kim, Jin-Hee, Seoul (KR)
(74) Representative: von Hellfeld, Axel, Dr. Dipl.-Phys.

(57) **Abstract**

A method of coding a compressed moving image including segmenting a local motion block from the compressed moving image, processing outer blocks of the local motion block, deciding a final contour of the local motion block from the processed outer blocks, and restoring colors inside the final contour.

## Description

### BACKGROUND OF THE INVENTION

### 1. FIELD OF THE INVENTION

The present invention relates to coding a compressed moving image, and more particularly to segmenting a moving object of a compressed moving image and converting and coding the compressed moving image in accordance with the moving picture experts group 4 (MPEG-4) standard.

### 2. BACKGROUND OF THE RELATED ART

In general, multimedia data have a large capacity but are limited in communication bandwidth. Thus, data compression is used to transmit/receive the multimedia data. Data compression implies a method for representing information in a smaller size, and restoration implies a method for decompressing the data.

The MPEG-4 standard is a compression method of content-based coding created for multimedia communication. Further, because MPEG-4 has a high compression efficiency and transmits data at a very low bit rate, mobile multimedia applications use MPEG-4. In addition, MPEG-4 is used for transmitting or storing large capacity digital audio/video data. However, the MPEG-4 standard is still in the beginning stages.

Object-based coding is one characteristic of MPEG-4. The object-based coding process segments objects, and allocates several bits to a more significant object, thereby efficiently compressing video data.

Conventional compression/decompression methods restore the entire image, and combine motion information and color and brightness information. However, decompressing the entire image takes a long time. Further, the amount of calculations required to process the entire image are disadvantageously increased.

### SUMMARY OF THE INVENTION

Accordingly, one object of the present invention is to address the above noted and other problems.

Another object of the present invention is to automatically segment a moving object of a compressed moving image so as to convert and code the compressed moving image using MPEG-4.

To achieve these and other advantages and in accordance with the purpose of the present invention, as embodied and broadly described herein, the present invention provides a novel method for segmenting a moving object of a compressed moving image including segmenting a local motion block from the compressed moving image, processing outer blocks of the local motion block, deciding a final contour of the local motion block from the processed outer blocks and restoring colors inside the final contour.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Fig. 1 is a flowchart illustrating a method for segmenting a moving object of a compressed moving image according to the present invention;
Fig. 2 is an overview illustrating an image processed by the method of Fig. 1;
Fig. 3 is a detailed flowchart illustrating a method for segmenting a moving object of a compressed moving image according to the present invention; and
Fig. 4 is an overview illustrating connections between blocks according to the present invention.

### BEST MODE OF THE INVENTION

Reference will now be made in detail to the preferred embodiments of the present invention, examples of which are illustrated in the accompanying drawings.

Object segmentation information of an image, namely, information of a boundary surface between different objects or a contour of an object can generate three dimensional model representation units. Segmenting an object of an image obtains a target object from the image based on the homogeneity or heterogeneity between the objects. Further, a moving image containing various information can be coded. For example, various object-unit multimedia elements can be synthesized to compose a moving image.

According to the present invention, a contour of a moving object is first decided using a motion vector of a frame at a specific interval, and then part of the motion block is decoded.

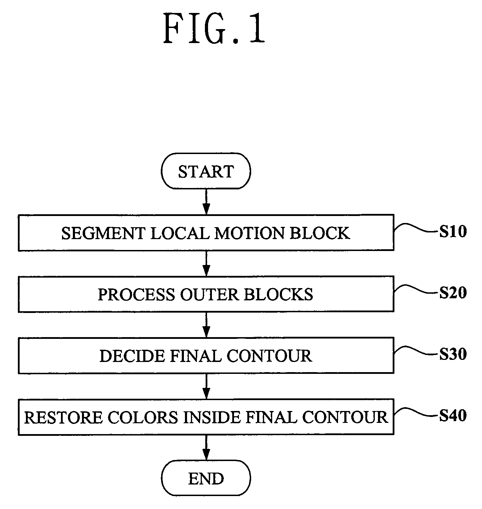

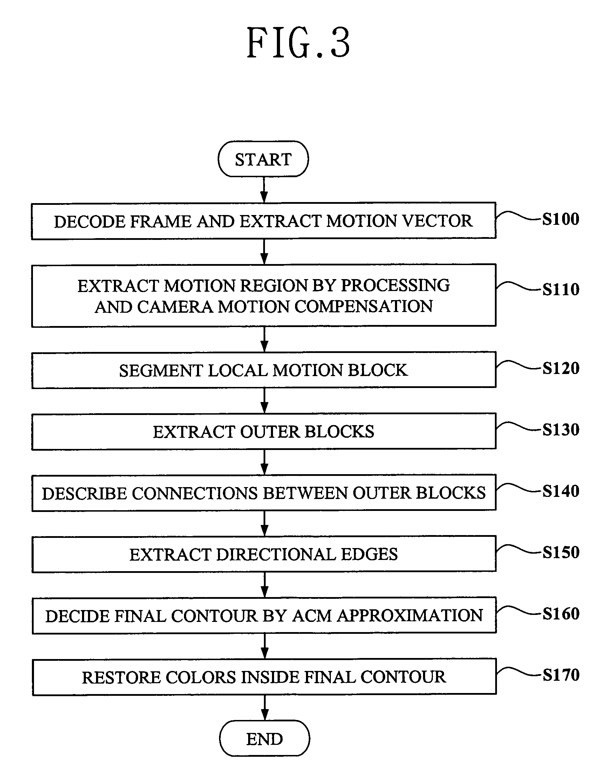

In more detail, Fig. 1 is a flowchart illustrating a method for segmenting a moving object of a compressed moving image according to the present invention. As shown, a local motion block is segmented (step S10), the outer blocks are processed (step S20), a final contour is decided (step S30), and colors inside the final contour are restored (step S40). Fig. 3 illustrates these features in greater detail.

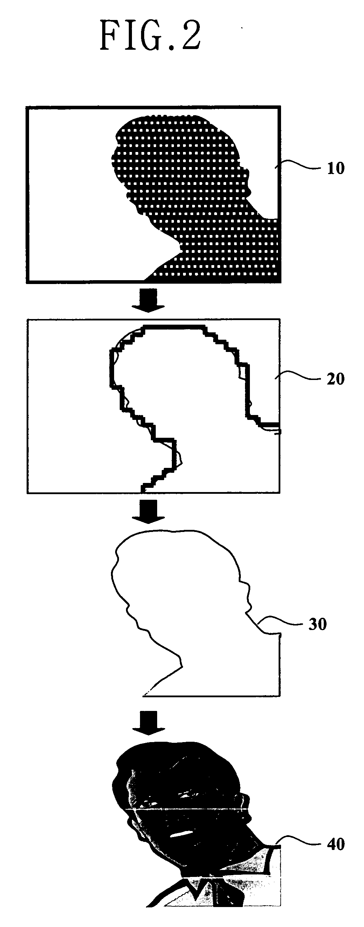

Turning now to Fig. 2, which illustrates an image processed by the method of Fig. 1.

As shown in Fig. 2, a first image 10 is formed by segmenting a motion region over a predetermined size into a local motion block in an image obtained by decoding a specific frame from a compressed moving image. As the motion region is initially segmented, a non-motion background and a moving human (object) block are segmented.

Further, a second image 20 is obtained by extracting outer blocks of the local motion block. Connections between the outer blocks, such as vertical, horizontal, top right bottom left diagonal, and top left bottom right diagonal are designated according to the outer block process. As a result, the outer blocks are displayed in the shape of stairs. A third image 30 is a contour extracted from the outer blocks. The contour indicates a shape of the human (object).

A fourth image 40 is a final object, namely, a target moving object obtained by restoring colors inside the contour. The human is extracted as it is from the first image except for the non-motion background.

Next, Fig. 3 is a detailed flowchart illustrating a method for segmenting the moving object of the compressed moving image according to the present invention.

As shown, a motion vector is extracted by decoding a frame at a specific interval from a compressed moving image (S100). A motion region is then extracted by preprocessing and camera motion compensation processing the extracted motion vector (S110).

The preprocessing process restricts over-segmentation and smoothes the image to reduce noises using a Gaussian filter or anisotropic diffusion suggested by Perona and Malik, for example. The Gaussian filter is a preprocessing process for smoothing the image to reduce noises. However, the Gaussian filter also smoothes a border, so that the border may be removed or a position of which may be changed. The anisotropic diffusion of Perona and Malik smoothes an inside region and removes noises without smoothing the border. The compensation process distinguishes motion of a camera from motion of an object to improve reliability of the vector.

Further, a motion region over a predetermined size is decided as a local motion block (S120) and outer blocks of the local motion block are extracted (S130). In addition, an original image of the extracted outer blocks is restored and connections between the blocks are described (S140). Here, the connections are described as vertical, horizontal, top right bottom left diagonal, and top left bottom right diagonal in the form of a chain.

A chain link is used and combines the blocks and sets connections between the outer blocks, and edges corresponding to the connection directions are extracted. The shape of the object is substantially displayed by the outer block process.

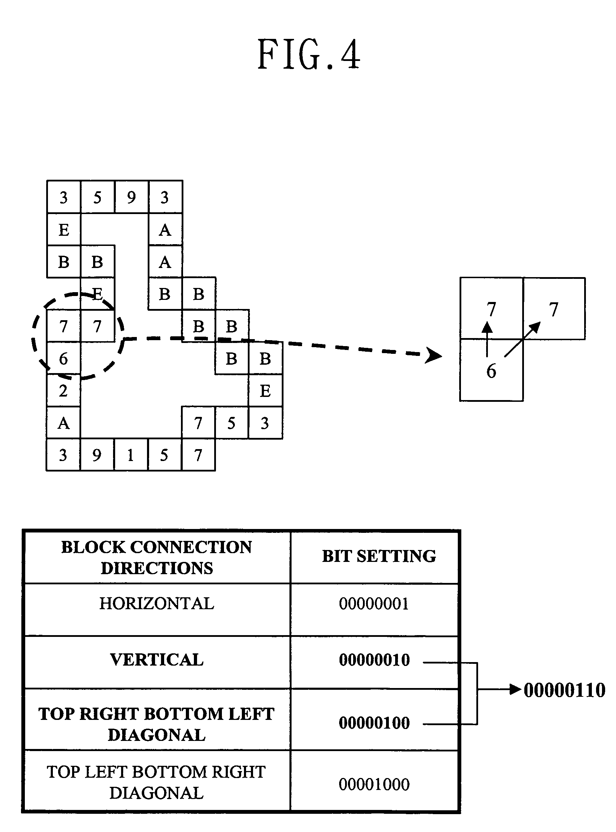

To describe the connections between the blocks, connection directions of eight blocks adjacent to the corresponding block are checked. If outer motion blocks as shown in Fig. 4 exist, connection information of each block is described by combining four bit values.

If a number and direction of the adjacent blocks are more than two, a plurality of block connection directions can be set by a bit combination. The described information is used merely to detect the edges of the corresponding block in the described directions. For example, when the connection between the blocks is 0*06(00000110), it implies that the block is connected to the adjacent blocks in the vertical and top right bottom left diagonal directions. When the edges inside the block are detected, the edges are extracted merely in the vertical and top right bottom left diagonal directions.

Directional edges corresponding to the connection directions of the blocks are extracted on the basis of the connections between the outer blocks (S150). A final contour is then decided by selecting the extracted edges as initial points of an ACM (Active Contour Model) theory, and ACM-approximating the contour of the object (S160). A moving object having a complete shape and colors is decided and segmented by restoring colors inside the final contour by decoding blocks inside the final contour (S170).

The ACM is called a snake model because its searched shape is similar to motion of a snake. It is a deformable model which can track a contour of an object. In addition, the ACM has an energy function type for balancing an inside force and an outside force, and displays the contour of the object as a group of dots representing a contour of an image by using formulas. A search region is designated in advance at an initial stage.

Thus, according to the present invention, the method for segmenting the moving object of the compressed moving image reduces an object segmentation time by segmenting the moving object and by decoding the motion vector in the frame at the specific interval and processing the image of part of the obtained block.

In addition, for extracting the edges to select the ACM initial points, the directional edges are extracted in the connection directions of the blocks, to improve accuracy in extraction of the object contour.

This invention may be conveniently implemented using a conventional general purpose digital computer or microprocessor programmed according to the teachings of the present specification, as well be apparent to those skilled in the computer art. Appropriate software coding can readily be prepared by skilled programmers based on the teachings of the present disclosure, as will be apparent to those skilled in the software art.

The invention may also be implemented by the preparation of application specific integrated circuits or by interconnecting an appropriate network of conventional component circuits, as will be readily apparent to those skilled in the art. The present invention includes a computer program product which is a storage medium including instructions which can be used to program a computer to perform a process of the invention. The storage medium can include, but is not limited to, any type of disk including floppy disks, optical discs, CD-ROMs, and magneto-optical disks, ROMs, RAMs, EPROMs, EEPROMs, magnetic or optical cards, or any type of media suitable for storing electronic instructions.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A method of coding a compressed moving image, comprising:
segmenting a local motion block from the compressed moving image;
processing outer blocks of the local motion block;
deciding a final contour of the local motion block from the processed outer blocks; and
restoring colors inside the final contour.

2. The method of claim 1, further comprising:
converting the compressed moving image in accordance with the moving picture experts group 4 (MPEG-4) standard.

3. The method of claim 1, wherein segmenting the local motion block comprises:
extracting a motion vector by decoding a frame of the compressed moving image at a specific interval;
detecting a motion region by preprocessing and camera motion compensation processing the extracted motion vector; and
deciding and segmenting the local motion block in the detected motion region.

4. The method of claim 3, wherein the preprocessing process uses a Gaussian filter or anisotropic diffusion.

5. The method of claim 3, wherein the camera motion compensation process comprises:
distinguishing a motion of a camera from a motion of an object to improve a reliability of the extracted motion vector.

6. The method of claim 1, wherein processing the outer blocks comprises:
extracting the outer blocks of the local motion block; and
describing connections between the extracted blocks.

7. The method of claim 6, wherein the connections are described as vertical, horizontal, top right bottom left diagonal, and top left bottom right diagonal, by restoring an original image of the outer blocks.

8. The method of claim 6, wherein the blocks are connected in the form of a chain according to the described connections between the blocks.

9. The method of claim 1, wherein deciding the final contour comprises:
extracting directional edges inside the outer blocks; and
selecting the extracted edges as initial points of an active contour model (ACM) theory, and ACM-approximating the directional edges.

10. The method of claim 9, wherein the directional edges are extracted from the connections between the outer blocks.

11. The method of claim 1, wherein restoring the colors is performed by decoding the blocks inside the final contour.

12. A method of converting and coding a compressed moving image according to a moving picture experts group 4 (MPEG-4) standard, comprising:
extracting a motion vector by decoding a frame of the compressed moving image at a specific interval;
detecting a motion region by preprocessing and camera motion compensation processing the extracted motion vector, and segmenting a local motion block;
extracting and connecting outer blocks of the segmented local motion block;
extracting directional edges from the outer blocks, and deciding a final contour of the moving object from the extracted edges; and
restoring colors inside the final contour by decoding blocks inside the final contour.

13. The method of claim 12, wherein the preprocessing uses a Gaussian filter or anisotropic diffusion.

14. The method of claim 13, wherein the camera motion compensation comprises:
distinguishing a motion of a camera from a motion of an object to improve reliability of the motion vector.

15. The method of claim 12, wherein the outer blocks are connected in the form of a chain according to the described connections between the blocks.

16. The method of claim 15, wherein the connections are described as vertical, horizontal, top right bottom left diagonal, and top left bottom right diagonal, by restoring an original image of the outer blocks.

17. The method of claim 12, wherein the directional edges are edges corresponding to the connection directions of the blocks.

18. The method of claim 12, wherein the final contour is decided by selecting the extracted edges as initial points of the active contour model (ACM) theory, and ACM-approximating the directional edges.
